# EUROPEAN PATENT APPLICATION

(11) **EP 4 661 164 A1**
(43) Date of publication of application: **10.12.2025**
(21) Application number: 23922145.0
(22) Date of filing: 07.04.2023
(51) Int. Cl.: H01M 10/615, H01M 10/625, H01M 10/635

(54) **SELF-HEATING STRUCTURE AND BATTERY PACK COMPRISING SELF-HEATING STRUCTURE**

(30) Priority: 16.02.2023 CN 202320253125 U
(71) Applicant: Eve Power Co., Ltd., Jingmen, Hubei 448000 (CN)
(72) Inventor: JIAN, Xingwen, Jingmen, Hubei 448000 (CN); PEI, Tingting, Jingmen, Hubei 448000 (CN); CHEN, Liquan, Jingmen, Hubei 448000 (CN); LI, Yarong, Jingmen, Hubei 448000 (CN); WU, Tianyu, Jingmen, Hubei 448000 (CN); YANG, Gang, Jingmen, Hubei 448000 (CN); CHEN, Xiang, Jingmen, Hubei 448000 (CN); WEN, Man, Jingmen, Hubei 448000 (CN)
(74) Representative: Nederlandsch Octrooibureau
(86) International application number: PCT/CN2023/086756
(87) International publication number: WO 2024/169016

(57) **Abstract**

A self-heating structure and a battery pack including the self-heating structure are disclosed by the present disclosure. The self-heating structure includes a heating member and a control unit. The heating member includes a heating body and a connection lead formed on the heating body. The connection lead is configured to be electrically connected to a positive tab or a negative tab of a cell pack, so that the heating member and the cell pack form a self-heating loop. The control unit is configured to control on-off of the self-heating loop according to a temperature of the cell pack. The control unit is disposed on the connection lead to integrate the control unit and the connection lead.

## Description

This application claims priority to and the benefit of Chinese Patent Application NO. 202320253125X, filed on February 16, 2023. The disclosure of which is incorporated herein by reference in its entirety.

### TECHNICAL FIELD

The present disclosure relates to the field of battery self-heating technologies, and in particular, to a self-heating structure and a battery pack including the self-heating structure.

### BACKGROUND

With the development of society, people pay more and more attention to environmental problems. New energy vehicle technologies are recognized by more and more consumers. It is expected that new energy vehicles will gradually replace traditional vehicles in the future. As the demand for new energy vehicles increases year by year, climate limitations on electric vehicles are becoming more and more obvious. It is well known that the performance of battery packs in low temperature environments will be limited or even unable to be charged. In order to solve this problem and ensure that the battery packs operate normally in low-temperature environments, a current method is heating batteries by using an electric energy of the battery packs themselves to realize self-heating of the batteries.

However, in the related technology, wiring of a self-heating loop is relatively complex, requires more connection wiring bundles and electronic components, and further requires more internal space of the battery packs. On one hand, an energy density of the battery packs is reduced, and on the other hand, a structural complexity and production costs of the battery pack are increased.

### SUMMARY

In order to overcome at least one of defects in the existing technology, the present disclosure provides a self-heating structure and a battery pack including the self-heating structure. This aims to solve the problem that an existing self-heating loop reduces an energy density of battery packs and increases the structural complexity and production costs of the battery packs.

Technical solutions adopted by the present disclosure to solve the problems are as follows.

A self-heating structure includes a heating member and a control unit. The heating member includes a heating body and a connection lead formed on the heating body. The connection lead is configured to be electrically connected to a positive tab or a negative tab of a cell pack, so that the heating member and the cell pack form a self-heating loop. The control unit is disposed on the connection lead. The control unit controls on-off of the self-heating loop according to a temperature of the cell pack.

In the self-heating structure provided by the present disclosure, the connection lead is formed on the heating body, thereby improving a structural strength and the operation stability of the heating member. Importantly, the heating member and the cell pack form the self-heating loop through the connection lead, and the control unit and the connection lead are integrated, so that the wiring is simplified, and the number and types of other connecting structures and electronic components are reduced. The self-heating structure has a simple structure and is easy to implement functions, and a space utilization of the battery pack is improved, thereby improving an energy density of the battery pack, and further reducing the structural complexity and production costs of the battery pack.

Specifically, under a case where the cell pack is at a relatively low temperature, the cell pack cannot be charged or has an extremely low charging efficiency, the control unit closes the self-heating loop, and the heating member is energized to rapidly generate a thermal effect, so as to achieve the effect of self-heating inside the cell pack. Under a case where the cell pack inside reaches a temperature suitable for normal charging, the control unit disconnects the self-heating loop, the heating member is de-energized to stop generating the thermal effect, and the self-heating inside the cell pack also ends accordingly, thereby preventing the cell pack from overheating to achieve the purpose of protecting the cell pack.

According to some embodiments of the present disclosure, the control unit includes a first sensing member. The first sensing member is configured to detect a first temperature signal inside the cell pack. The control unit controls the on-off of the self-heating loop according to the first temperature signal.

According to some embodiments of the present disclosure, a surface of the heating member is provided with a passivation layer.

According to some embodiments of the present disclosure, the heating member is a metal foil, and the passivation layer is formed on a surface of the metal foil.

In another aspect, the present disclosure further provides a battery pack. The battery pack includes at least one cell pack. The battery pack further includes the above-described self-heating structure.

According to some embodiments of the present disclosure, the connection lead is electrically connected to the positive tab of the cell pack.

According to some embodiments of the present disclosure, the connection lead is integrally connected to the positive tab of the cell pack.

According to some embodiments of the present disclosure, the heating member extends along a large surface of the cell pack and is disposed in contact with the large surface of the cell pack.

According to some embodiments of the present disclosure, a projection of the heating member on the cell pack does not exceed the large surface of the cell pack.

According to some embodiments of the present disclosure, the battery pack further includes a casing, one or more cell packs form a battery module, the battery module is disposed inside the casing, and the heating member is sandwiched between the casing and the battery module.

According to some embodiments of the present disclosure, the battery pack further includes a second sensing member. The second sensing member is disposed on a surface of the cell pack. The second sensing member is configured to detect a second temperature signal on the surface of the cell pack, and control the on-off of the self-heating loop according to the second temperature signal.

### BRIEF DESCRIPTION OF THE DRAWINGS

FIG. 1 is a schematic three-dimensional structural view of a battery pack according to the embodiments of the present disclosure.
FIG. 2 is a schematic structural view of a self-heating structure and a battery module according to the embodiments of the present disclosure.
FIG. 3 is an exploded structural view of a self-heating structure and a cell pack according to the embodiments of the present disclosure.

Reference numerals are as follows:
1, battery pack; 10, heating member; 101, heating body; 102, connection lead; 11, battery module; 111, cell pack; 1111, positive plate; 1112, positive tab; 1113, negative plate; 1114, negative tab; 12, casing; 13, separator plate.

### DETAILED DESCRIPTION

In the description of the present disclosure, it should be noted that terms such as "above", "below", "front", "rear", "left", "right", "vertical", "horizontal", "top", "bottom", "inner", "outer" refer to the orientation or positional relationship based on the illustration of the accompanying drawings, and are only for the purpose of facilitating and simplifying the description of the present disclosure, rather than indicating or implying that the apparatus or component referred to must have a particular orientation or must be configured or operated in a particular orientation, therefore should not be construed as a limitation towards the present disclosure.

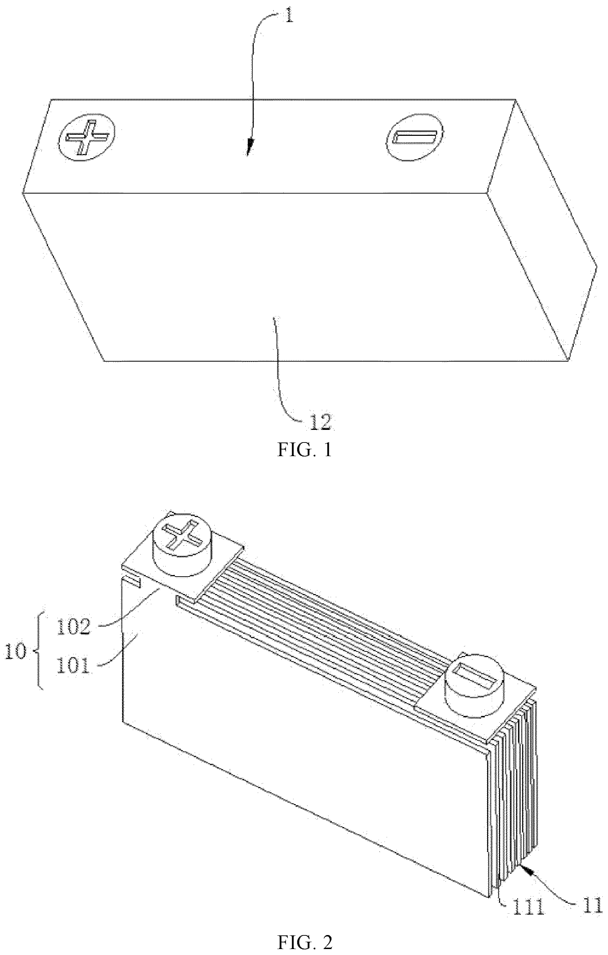

Referring to FIG. 1 to FIG. 3, the present disclosure discloses a self-heating structure and a battery pack 1 including the self-heating structure. Specifically, the battery pack 1 further includes at least one cell pack 111 and a casing 12. The self-heating structure includes a heating member 10 and a control unit. The heating member 10 includes a heating body 101 and a connection lead 102 formed on the heating body 101. The connection lead 102 is configured to be electrically connected to a positive tab 1112 or a negative tab 1114 of the cell pack 111, so that the heating member 10 and the cell pack 111 form a self-heating loop. The control unit is disposed on the connection lead 102. The control unit controls on-off of the self-heating loop according to a temperature of the cell pack.

As such, the connection lead 102 is formed on the heating body 101, thereby improving a structural strength and the operation stability of the heating member 10. More importantly, the heating member 10 and the cell pack 11 form the self-heating loop through the connection lead 102, and the control unit and the connection lead are integrated, so that the wiring is simplified, and the number and types of other connecting structures and electronic components are reduced. The self-heating structure has a simple structure and is easy to implement functions, and a space utilization of the battery pack 1 is improved, thereby improving an energy density of the battery pack 1, and further reducing the structural complexity and production costs of the battery pack 1.

It should be noted that the connection lead 102 is formed on the heating body 101, which may be, but is not limited to, an integral injection molding, an integral cutting molding, an integral stamping molding, etc., which is not limited herein.

Specifically, in this embodiment, a width of the connection lead 102 is 3 µm. Certainly, in some other embodiments, the width of the connection lead 102 may also be, but not limited to, 4 µm, 5 µm, 6 µm, 7 µm, etc., which is not limited herein.

Specifically, in this embodiment, the control unit includes a first sensing member. The first sensing member is configured to detect a first temperature signal inside the cell pack. The control unit controls the on-off of the self-heating loop according to the first temperature signal. Certainly, in some other embodiments, the control unit may further include, but is not limited to, a temperature relay, which is not limited herein.

Furthermore, in this embodiment, the battery pack 1 further includes a second sensing member. The second sensing member is disposed on a surface of the cell pack 111. The second sensing member is configured to detect a second temperature signal on the surface of the cell pack 111, and control the on-off of the self-heating loop according to the second temperature signal. As such, the first sensing member and the second sensing member detect the temperature inside the cell pack 111 and the temperature on the surface of the cell pack 111 respectively, so that dual detection of the temperature of the cell pack 111 is realized. This ensures the accuracy of temperature detection for the cell pack 111, thereby precisely controlling the on-off of the self-heating loop to improve the charging efficiency of the cell pack 111 in low temperature environments.

It should be noted that in some embodiments, the first sensing member and the second sensing member are equivalent to sensing switches. Under a case where the temperature signal is detected as being lower than a preset value, the first sensing member and the second sensing member are closed to energize the self-heating loop. Under a case where the temperature signal is detected as being higher than the preset value, the second sensing member and the second sensing member are disconnected to de-energize the self-heating loop.

It should be noted that in some embodiments, the first sensing member and the second sensing member are equivalent to sensors. The control module receives the first temperature signal and the second temperature signal. The control module controls the on-off of the self-heating loop according to the first temperature signal and the second temperature signal. Specifically, the control module may be, but is not limited to, a battery management system (BMS) of the battery pack 1.

Specifically, in this embodiment, under a case where the cell pack 111 is at a relatively low temperature, the cell pack 111 cannot be charged or has an extremely low charging efficiency, the first sensing member and the second sensing member close the self-heating loop, the heating member 10 is energized on to rapidly generate a thermal effect, so as to achieve the effect of self-heating inside the cell pack 111. Under a case where the cell pack 111 inside reaches a temperature suitable for normal charging, the first sensing member and the second sensing member disconnect the self-heating loop, the heating member 10 is de-energized to stop generating the thermal effect, and the self-heating inside the cell pack 111 also ends accordingly, thereby preventing the cell pack 111 from overheating to achieve the purpose of protecting the cell pack 111.

It should be noted that in some other embodiments, only the first sensing member may be provided instead of the second sensing member, so as to save production costs.

Furthermore, in this embodiment, a surface of the heating member 10 is provided with a passivation layer to prevent the heating member 10 from being corroded by an electrolyte, thereby preventing the heating member 10 from operating abnormally. For example, the passivation layer may prevent the heating member 10 from failing due to direct conduction between the heating member 10 and the electrolyte or excessively generating heat by the heating member 10.

Preferably, in this embodiment, the heating member 10 is a metal foil. The passivation layer is formed on a surface of the metal foil. As such, the passivation layer and the metal foil are of an integrated structure, so as to prevent the passivation layer from falling off and failing after long-term use, thereby greatly improving the safety performance. For example, the metal foil may be treated with concentrated sulfuric acid (98% concentration) to form the passivation layer on the surface of the metal foil.

It should be noted that in some other embodiments, the heating member 10 may also be, but not limited to, graphite. The passivation layer may be, but not limited to, phenethyl amine iodide, benzyl amine iodide, etc., which is not limited herein.

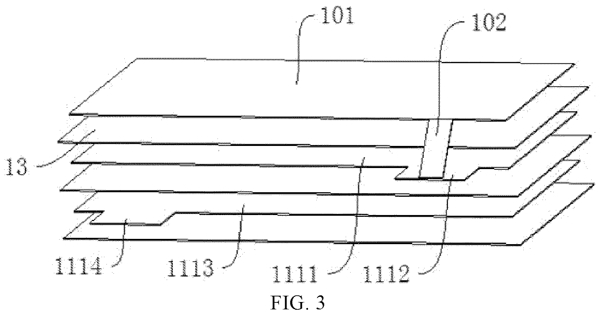

Referring to FIG. 3, it may be understood that the cell pack 111 is formed by stacking or winding a plurality of positive plates 1111 and a plurality of negative plates 1113. A separator plate 13 is disposed between adjacent two of the electrode plates. The positive tab 1112 is disposed on each of the positive plate 111. The negative tab 1114 is disposed on each of the negative plates 1113. The number of the negative plates 1113 is generally greater than the number of the positive plates 1111, so as to prevent short circuits inside the cell pack 111. Specifically, in this embodiment, a chemical activity of the positive plates 1111, a chemical activity of the heating member 10, and a chemical activity of the negative plates 1113 decrease in sequence. More specifically, the positive plates 1111 may be made of, but is not limited to, an aluminum foil. The heating member 10 may be made of, but is not limited to, a nickel foil. The negative plates 1113 may be made of, but is not limited to, a copper foil.

Preferably, in this embodiment, the connection lead 102 is electrically connected to the positive tab 1112 of the cell pack 111, so that the positive plate 1111 and the heating member 10 form the self-heating loop. The positive plate 1111 is equivalent to a positive electrode, and the heating member 10 is equivalent to a negative electrode, thereby preventing the heating member 10 and the negative plates 1113 from forming a loop, and preventing safety accidents caused by loss of the negative plates 1113.

Preferably, in this embodiment, in order to improve the connection strength and the operating stability, the connection lead 102 is integrally connected to the positive tab 1112 of the cell pack 111, specifically, but is not limited to, welding or hot riveting, etc., which is not limited herein.

Certainly, in some other embodiments, the connection lead 102 may also be integrally connected to the negative tab 1114 of the cell pack 111, so that the heating member 10 and the negative plate 1113 form the self-heating loop. The heating member 10 is equivalent to the positive electrode, and the negative plate 1113 is equivalent to the negative electrode.

Furthermore, in this embodiment, in order to increase a surface contact area with the cell pack 111, the heating member 10 is in a sheet shape, and the heating member 10 extends along a large surface of the cell pack 111 and is disposed in contact with the large surface of the cell pack 111, so as to improve the heat exchange effect, thereby increasing a temperature rise rate of the cell pack 111.

Preferably, in this embodiment, in order to avoid the problem that a size of the heating member 10 is too large to occupy too much space of the battery pack 1, a projection of the heating member 10 on the cell pack 111 does not exceed the large surface of the cell pack 111, so as to ensure that the battery pack 1 can have a relatively high space utilization and energy density.

As shown in FIG. 1 and FIG. 2, preferably, in this embodiment, a plurality of cell packs 111 form a battery module 11. The battery module 11 is disposed in the casing 12. The heating member 10 is sandwiched between the casing 12 and the battery module 11. Compared with disposing the heating member 10 between the two cell packs 111, the safety performance of the battery pack 1 can be improved, and safety hazards can be eliminated.

Specifically, in this embodiment, a thickness of a reinforcing sheet of a battery is similar to a thickness of each of the electrode plates, so as to control an overall size and assembly of the battery pack 1. More specifically, the thickness of the reinforcing sheet may be, but is not limited to, 45 µm, 50 µm, 55 µm, etc., which is not limited herein.

In summary, the self-heating structure and the battery pack 1 including the self-heating structure disclosed in the present disclosure may at least bring beneficial technical effects as follows:
1) The connection lead 102 is formed on the heating body 101, thereby improving the structural strength and operation stability of the heating member 10.
2) The heating member 10 and the cell pack 111 form the self-heating loop through the connection lead 102, and the control unit and the connection lead 102 are integrated, so that the wiring is simplified, and the number and types of other connecting structures and electronic components are reduced. The self-heating structure has a simple structure and is easy to implement functions, and a space utilization of the battery pack 1 is improved, thereby improving the energy density of the battery pack 1, and further reducing the structural complexity and production costs of the battery pack 1.
3) The surface of the heating member 10 is provided with the passivation layer, so as to prevent the heating member 10 from being corroded by the electrolyte, thereby preventing the self-heating loop from failing due to direct conduction between the heating member 10 and the electrolyte or excessively generating heat by the heating member 10.
4) The passivation layer is formed on the surface of the metal foil, so that the passivation layer and the metal foil are of the integrated structure, so as to prevent the passivation layer from falling off and failing after long-term use, thereby greatly improving the safety performance.
5) The first sensing member and the second sensing member detect the temperature inside the cell pack 111 and the temperature on the surface of the cell pack 111 respectively, so that dual detection of the temperature of the cell pack 111 is realized. This ensures the accuracy of temperature detection for the cell pack 111, thereby precisely controlling the on-off of the self-heating loop to improve the cell pack 111
   the charging efficiency of 111 in low temperature environments.

## Claims

1. A self-heating structure, comprising:
a heating member (10) comprising a heating body (101) and a connection lead (102) formed on the heating body (101), wherein the connection lead (102) is configured to be electrically connected to a positive tab (1112) or a negative tab (1114) of a cell pack (111), so that the heating member (10) and the cell pack (111) form a self-heating loop; and
a control unit disposed on the connection lead (102), wherein the control unit controls on-off of the self-heating loop according to a temperature of the cell pack.

2. The self-heating structure according to claim 1, wherein the control unit comprises a first sensing member, the first sensing member is configured to detect a first temperature signal inside the cell pack, and the control unit controls the on-off of the self-heating loop according to the first temperature signal.

3. The self-heating structure according to claim 1, wherein a surface of the heating member (10) is provided with a passivation layer.

4. The self-heating structure according to claim 3, wherein the heating member (10) is a metal foil, and the passivation layer is formed on a surface of the metal foil.

5. A battery pack, comprising at least one cell pack (111) and the self-heating structure according to any one of claims 1 to 4.

6. The battery pack according to claim 5, wherein the connection lead (102) is electrically connected to the positive tab (1112) of the cell pack (111).

7. The battery pack according to claim 6, wherein the connection lead (102) is integrally connected to the positive tab (1112) of the cell pack (111).

8. The battery pack according to claim 5, wherein the heating member (10) extends along a large surface of the cell pack (111) and is disposed in contact with the large surface of the cell pack (111).

9. The battery pack according to claim 8, wherein a projection of the heating member (10) on the cell pack (111) does not exceed the large surface of the cell pack (111).

10. The battery pack according to any one of claims 5 to 9, wherein the battery pack (1) further comprises a casing (12), one or more of the at least one cell pack (111) constitute a battery module (11), the battery module (11) is disposed inside the casing (12), and the heating member (10) is sandwiched between the casing (12) and the battery module (11).

11. The battery pack according to any one of claims 5 to 9, wherein the battery pack (1) further comprises a second sensing member, the second sensing member is disposed on a surface of the cell pack (111), and the second sensing member is configured to detect a second temperature signal on the surface of the cell pack (111) and control the on-off of the self-heating loop according to the second temperature signal.
